Europäisches Patentamt

European Patent Office

Office européen des brevets

(11) Veröffentlichungsnummer: **0 258 687**
**A1**

(12) # EUROPÄISCHE PATENTANMELDUNG

(21) Anmeldenummer: 87111518.4

(22) Anmeldetag: 08.08.87

(51) Int. Cl.4: **A23K 1/16** , **A23K 1/18**

(30) Priorität: 04.09.86 DE 3630213
05.02.87 DE 3703489

(43) Veröffentlichungstag der Anmeldung:
09.03.88 Patentblatt 88/10

(84) Benannte Vertragsstaaten:
AT BE CH DE ES FR GB GR IT LI LU NL SE

(71) Anmelder: **Effem GmbH**
**Eitzer Landstrasse**
**D-2810 Verden/Aller(DE)**

(72) Erfinder: **Von Tucher, Wolf-Freiherr**
**Sirachsberg**
**D-3118 Bad Bevensen(DE)**

(74) Vertreter: **Goddar, Heinz J., Dr. et al**
**FORRESTER & BOEHMERT**
**Widenmayerstrasse 4/I**
**D-8000 München 22(DE)**

(54) **Tierfutter.**

(57) Tierfutter mit einem Futterzusatz, der einen Gehalt an wenigstens einem vorzugsweise geradkettigen Polyalkohol, wie Glycerin, aufweist, wobei der Futterzusatz einen Polyalkoholgehalt von 0,4 bis 8,5 Gew.-%, bezogen auf die gesamte Trockenmasse des Tierfutters, aufweist.

# Tierfutter

Die Erfindung betrifft ein Tierfutter mit einem Futterzusatz, der einen Gehalt an wenigstens einem vorzugsweise geradkettigen Polyalkohol, wie Glycerin, aufweist.

Viele in der Stadt gehaltene Heimtiere haben heutzutage nicht mehr die Möglichkeit, ihre Notdurft im Freien zu verrichten. Dies liegt zum einen an der zunehmenden Bodenversiegelung in unseren Städten, so daß für Tiere, wie z.B. Katzen, die ihre Ausscheidungen verscharren, immer weniger für diesen Zweck geeignete Flächen zur Verfügung stehen. Zum anderen verbringen viele Heimtiere, hauptsächlich aufgrund der Wohnsituation ihrer Halter, ihr gesamtes Leben ausschließlich in geschlossenen Räumen.

Für diese Tiere muß nun in der Wohnung eine Möglichkeit geschaffen werden, ihre Notdurft zu verrichten. Für diesen Zweck werden im allgemeinen mit Tierstreu gefüllte Schalen oder dgl. bereitgestellt. Selbst wenn die Faeces der Tiere sofort beseitigt werden, was in den seltensten Fällen möglich ist, kommt es unvermeidlich zu Geruchsbelästigungen.

Diesem Problem versuchte man bisher durch Verbesserungen und Weiterentwicklungen der Tierstreumaterialien zu begegnen. So ist beispielsweise aus der DE-PS 31 21 403 eine Tierstreu bekannt, die hinsichtlich Saugfähigkeit und Geruchsbindung hervorragende Eigenschaften besitzt. Zum einen sind aber auch bei diesem Material, insbesondere bei längerer Abwesenheit des Halters, Saugfähigkeit und Geruchsbindung naturgemäß begrenzt, zum anderen wirkt die Geruchsbindung der Tierstreu hauptsächlich gegenüber Urin, weniger gegenüber Faeces. Unangenehme Geruchsbelästigungen lassen sich also auch in diesem Falle nicht vermeiden.

Es ist daher wünschenswert, neben dem Einsatz besonders effektiver Tierstreumaterialien gleichzeitig zu versuchen, die Bildung von unangenehmen Gerüchen in Zusammenhang mit tierischem Faeces zu verringern.

Der unangenehme Geruch von tierischem Faeces spielt aber nicht nur bei Heim-, sondern auch bei Nutztieren eine Rolle, insbesondere wenn man bedenkt, daß zahlreiche dieser Nutztiere nicht im freien, sondern in geschlossenen Großstellen gehalten werden, in denen die Geruchsbelästigung durch den tierischen Faeces eine erhebliche - unangenehme - Rolle spielt.

Aus der US-PS 4 284 652 ist bereits ein Tierfutter der gattungsgemäßen Art in Form einer Heimtiernahrung mit einem Glyceringehalt von 3 bis 50 Gew.-% bekannt. Auch die US-PS 4 454 163 beschreibt eine Heimtiernahrung mit einem Glyceringehalt, wobei es sich dort um einen Biskuit handelt. Heimtierfutter mit Biskuitgehalt sind weiterhin in der US-PS 4 049 835 sowie in der US-PS 4 348 418 beschrieben, wobei in letzterer außer Glycerin auch andere Polyalkohole als Futterzusatz erwähnt sind. Weitere Druckschriften, die den Zusatz von Polyalkoholen, u.a. auch von Glycerin, zu Tierfutter betreffen, sind die US-PS 4 202 887, einen Polyalkoholzusatz für Weidevieh betreffend, US-PS 3 401 039, 3 723 130, 3 791 241, 4 055 676, 4 191 783, 4 598 097 und 4 600 586.

In sämtlichen vorgenannten Druckschriften dient der Polyalkoholzusatz dem Zweck, die Verwertung und/oder Verträglichkeit des betreffenden Tierfutters zu verbessern. Die in diesen Druckschriften angegebenen, einen weiten Bereich überdeckenden Prozentsätze der jeweiligen Polyalkoholzusätze führen zu keiner Lösung des weiter oben angegebenen Geruchsproblems, wobei darauf hinzuweisen ist, daß diese Frage in den vorgenannten Druckschriften in keiner Weise angesprochen ist.

Der Erfindung liegt die Aufgabe zugründe, ein Tierfutter der eingangs genannten Art zu schaffen, welches die Entwicklung unangenehmer Gerüche im Zusammenhang mit tierischem Faeces sowohl bei Nutz-als auch bei Heimtieren wesentlich verringern kann.

Erfindungsgemäß wird diese Aufgabe bei einem Tierfutter der gattungsgemäßen Art dadurch gelöst, daß der Futterzusatz einen Polyalkoholgehalt von 0,4 bis 8,5 Gew.-%, bezogen auf die gesamte Trockenmasse des Tierfutters, aufweist.

Dabei kann vorgesehen sein, daß bei Verwendung als Heimtiernahrung der Polyalkoholgehalt des Futterzusatzes mindestens 2,5 Gew.-%, bezogen auf die gesamte Trockenmasse des Tierfutters, beträgt.

Weiterhin schlägt die Erfindung ggf. vor, daß bei Verwendung als Heimtiernahrung der Polyalkoholgehalt des Futterzusatzes ca. 6 Gew.-%, bezogen auf die gesamte Trockenmasse des Tierfutters, beträgt.

Eine weitere Ausführungsform der Erfindung ist dadurch gekennzeichnet, daß bei Verwendung als Nutztiernahrung der Polyalkoholgehalt des Futterzusatzes 0,4 bis 2,5 Gew.-%, bezogen auf die gesamte Trockenmasse des Tierfutters, beträgt.

Die Erfindung schlägt auch vor, daß bei Verwendung als Nutztiernahrung der Polyalkoholgehalt des Futterzusatzes, bezogen auf die gesamte Trockenmasse des Tierfutters ca. 1 bis 2 Gew.-% beträgt.

Eine weitere Ausführungsform des erfindungsgemäßen Tierfutters ist dadurch gekennzeichnet, daß der Futterzusatz einen Gehalt an Pantothen- und/oder Laurinsäure aufweist.

Dabei kann vorgesehen sein, daß der Futterzusatz einen Pantothensäuregehalt von 0,0005 bis 0,0025 Gew.-%, bezogen auf die gesamte Trockenmasse des Tierfutters, aufweist.

Ferner schlägt die Erfindung vor, daß der Pantothensäuregehalt des Futterzusatzes 0,001 bis 0,002 Gew.-%, bezogen auf die gesamte Trockenmasse des Tierfutters, beträgt.

Eine weitere Ausführungsform der Erfindung ist dadurch gekennzeichnet, daß der Futterzusatz einen Gehalt von 10 bis 30 Gew.-%, bezogen auf den Polyalkoholgehalt des Futterzusatzes, Laurinsäure aufweist.

Dabei kann insbesondere vorgesehen sein, daß der Laurinsäuregehalt des Futterzusatzes, bezogen auf den Polyalkoholgehalt des Futterzusatzes, 15 bis 20 Gew.-% beträgt.

Der Erfindung liegt die überraschende Erkenntnis zugrunde, daß es gelingt, durch Einstellung des bereits allgemein bekannten Zusatzes von Polyalkoholen, vorzugsweise Glycerin, zu Tierfutter auf einen wohldefinierten Prozentbereich die Entwicklung von unangenehmen Gerüchen in tierischem Faeces ganz erheblich zu verringern. Von entscheidender Bedeutung ist dabei, daß nicht beliebige Prozentsätze an Polyalkoholen, insbesonder Glycerin, verwendet werden, sondern speziell ausgewählte, wie sie Gegenstand der Patentansprüche sind. Die beanspruchten Gehalte an Pantothensäure und/oder Laurinsäure entfalten einen synergistischen Effekt im Zusammenwirken mit dem Glycerinzusatz und steigern die geruchsverringernde Wirkung nochmals in für den Fachmann völlig unvorhersehbarer Weise.

Weitere Merkmale und Vorteile der Erfindung ergeben sich aus der nachstehenden Beschreibung, in der die Erfindung anhand eines Ausführungsbeispieles im einzelnen erläutert ist.

Bei dem hier beschriebenen Ausführungsbeispiel mit Akzeptanztest wurde zunächst ein halbfeuchtes Katzen-Fertigfutter im übrigen handelsüblicher Art mit einem Futterzusatz versetzt, der 6 Gew.-%, bezogen auf die gesamte Trockenmasse des Fertigfutters, Glycerin aufwies. Anschließend wurde unter Katzenhaltern, die nur eine Katze besitzen, und deren Katze ausschließlich eine Katzentoilette benutzt, ein Akzeptanztest durchgeführt, bei dem einmal das vorgenannte Fertigfutter ohne Zusatz, zum anderen aber das erfindungsgemäße Fertigfutter mit Futterzusatz, wie vorstehend beschrieben, eingesetzt wurden. Zunächst erhielt dabei die jeweilige Testperson genügend herkömmliches Fertigfutter, um die betreffende Katze eine Woche lang ausschließlich damit zu füttern. Gleichzeitig wurden der Testperson 5 kg einer handelsüblichen Katzenstreu zum Gebrauch überlassen. Anschließend wurde der Test eine Woche lang mit derselben Katzenstreu und dem erfindungsgemäßen Fertigfutter wiederholt. Bei der Hälfte der befragten Haushalte wurde umgekehrt verfahren, d.h. zunächst das erfindungsgemäße Fertigfutter mit Futterzusatz und danach das herkömmliche Fertigfutter ohne Futterzusatz ausgegeben. Der Test erfolgte verdeckt, d.h., es war für die Befragten nicht ersichtlich, ob das Fertigfutter oder aber die gleichzeitig zur Verfügung gestellte Katzenstreu getestet wurden.

Nach Abschluß der Fütterungsphase von zwei Wochen wurden Preferenzfragen zur Streu gestellt. Dabei zeigte sich, daß die Katzenstreu, die in Verbindung mit dem Fertigfutter mit Zusatz, also dem erfindungsgemäßen Fertigfutter, getestet wurde, in allen wesentlichen geruchsbindenden Eigenschaften signifikant besser bewertet wurde.

Da in bundesdeutschen Haushalten bei Heimtiernahrung zunehmend auf Fertigfutter zurückgegriffen wird (in anderen Ländern, wie z.B. den U.S.A., liegt der Anteil an Fertigfutter noch bedeutend höher), ergibt sich durch die Erfindung eine einfache, völlig überraschende Möglichkeit, über die Beimischung der erfindungsgemäßen Mengen an polyalkoholhaltigem Futterzusatz vor der Abfüllung des Fertigfutters einen wesentlichen Beitrag zur Geruchsverminderung im Zusammenhang mit den tierischen Faeces zu leisten. Dabei können die erfindungsgemäßen Futterzusätze sowohl Feucht-als auch Trockenfuttermitteln beigemischt werden. Da sich die beanspruchten Prozentzahlen auf die Trockenmasse des Futtermittels beziehen, ergeben sich bei Zumischung von Feuchtfutter Prozentzahlen, die etwa 1/4 der erfindungsgemäß beanspruchten betragen, d.h., bei Feuchtfutter ergibt sich als optimaler Wert für die Zumischung des erfindungsgemäßen Polyalkohols, vorzugsweise Glycerin, ein Wert von ca. 1 bis 1,5 Gew.-%, bezogen auf die gesamte Masse des Feuchtfutters. Ähnlich verhält es sich natürlich bei Einsatz der Erfindung zur Geruchsverminderung der Faeces von Tieren im Nutztierhaltungsbereich.

Die in der vorstehenden Beschreibung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

**Ansprüche**

1. Tierfutter mit einem Futterzusatz, der einen Gehalt an wenigstens einem vorzugsweise geradkettigen Polyalkohol, wie Glycerin, aufweist, dadurch gekennzeichnet, daß der Futterzusatz einen Polyalkoholgehalt von 0,4 bis 8,5 Gew.-%, bezogen auf die gesamte Trokkenmasse des Tierfutters, aufweist.

2. Tierfutter nach Anspruch 1, dadurch gekennzeichnet, daß bei Verwendung als Heimtiernahrung der Polyalkoholgehalt des Futterzusatzes mindestens 2,5 Gew.-%, bezogen auf die gesamte Trockenmasse des Tierfutters, beträgt.

3. Tierfutter nach Anspruch 2, dadurch gekennzeichnet, daß bei Verwendung als Heimtiernahrung der Polyalkoholgehalt des Futterzusatzes ca. 6 Gew.-%, bezogen auf die gesamte Trockenmasse des Tierfutters, beträgt.

4. Tierfutter nach Anspruch 1, dadurch gekennzeichnet, daß bei Verwendung als Nutztiernahrung der Polyalkoholgehalt des Futterzusatzes 0,4 bis 2,5 Gew.-%, bezogen auf die gesamte Trockenmasse des Tierfutters, beträgt.

5. Tierfutter nach Anspruch 4, dadurch gekennzeichnet, daß bei Verwendung als Nutztiernahrung der Polyalkoholgehalt des Futterzusatzes, bezogen auf die gesamte Trockenmasse des Tierfutters ca. 1 bis 2 Gew.-% beträgt.

6. Tierfutter nach einem der vorangehenden Ansprüche, dadurch gekennzeichnet, daß der Futterzusatz einen Gehalt an Pantothen-und/oder Laurinsäure aufweist.

7. Tierfutter nach Anspruch 6, dadurch gekennzeichnet, daß der Futterzusatz einen Pantothensäuregehalt von 0,0005 bis 0,0025 Gew.-%, bezogen auf die gesamte Trockenmasse des Tierfutters, aufweist.

8. Tierfutter nach Anspruch 7, dadurch gekennzeichnet, daß der Pantothensäuregehalt des Futterzusatzes 0,001 bis 0,002 Gew.-%, bezogen auf die gesamte Trokkenmasse des Tierfutters, beträgt.

9. Tierfutter nach einem der Ansprüche 6 bis 8, dadurch gekennzeichnet, daß der Futterzusatz einen Gehalt von 10 bis 30 Gew.-%, bezogen auf den Polyalkoholgehalt des Futterzusatzes, Laurinsäure aufweist.

10. Tierfutter nach Anspruch 9, dadurch gekennzeichnet, daß der Laurinsäuregehalt des Futterzusatzes, bezogen auf den Polyalkoholgehalt des Futterzusatzes, 15 bis 20 Gew.-% beträgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 010 250 (W. FREIHERR VON TUCHER) <br> * Seiten 1,2, Ansprüche 1,4-8; Seite 6, Zeilen 7-24; Seite 8, Zeilen 14-23; Seite 9, die zwei letzten Zeilen * <br> --- | 1,4-6,9 ,10 | A 23 K 1/16 <br> A 23 K 1/18 |
| D,X | US-A-4 284 652 (E.H. CHRISTENSEN) <br> * Spalten 13-15, Ansprüche 1-3,5-9,11-13,33; Spalte 5, Zeilen 44-56 * <br> --- | 1-3 | |
| X | GB-A-1 531 376 (GENERAL FOODS CORP.) <br> * Seite 4, Ansprüche 1,21; Seite 2, Zeilen 108-125 * <br> --- | 1-3 | |
| X | GB-A-1 380 394 (PEDIGREE PET FOODS) <br> * Seiten 3,4, Beispiel 1; Seite 5, Ansprüche 1,7 * <br> --- | 1-3 | |
| A | PATENT ABSTRACTS OF JAPAN, Band 4, Nr. 106 (C-20)[588], 30. Juli 1980; & JP-A-55 68 272 (IDEMITSU KOSAN K.K.) 22-05-1980 <br> * Zusammenfassung * <br> --- | 1 | RECHERCHIERTE SACHGEBIETE (Int. Cl.4) <br><br> A 23 K |
| A | CHEMICAL ABSTRACTS, Band 84, Nr. 8, 23. Februar 1976, Seite 398, Zusammenfassung Nr. 49859k, Columbus, Ohio, US; & JP-A-75 18 639 (RYOKO SANGYO K.K.) 1975 <br> --- | 1 | |
| A | GB-A-1 048 724 (FEED SERVICE (LIVESTOCK) LTD) <br> * Seite 2, Ansprüche 1,5,10 * <br> ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 20-11-1987 | DEKEIREL M.J. |